# EUROPEAN PATENT APPLICATION

(11) **EP 1 688 829 A2**
(43) Date of publication of application: **09.08.2006**
(21) Application number: 06100229.1
(22) Date of filing: 11.01.2006
(51) Int. Cl.: G06F 3/03

(54) **Baseline arechitecture monitors application for distributed systems**

(30) Priority: 07.02.2005 US 650774; 07.06.2005 US 146713
(71) Applicant: MICROSOFT CORPORATION, Redmond, WA 98052 (US)
(72) Inventor: Trowbridge, David N., Redmond, WA 98052 (US); Lafferty, Edward R., Redmond, WA 98052 (US); Cunningham, Howard G., Redmond, WA 98052 (US); Wanagel, Jonathan J., Redmond, WA 98052 (US); Brader, Lawrence A., Redmond, WA 98052 (US)
(74) Representative: Grünecker, Kinkeldey, Stockmair & Schwanhäusser Anwaltssozietät

(57) **Abstract**

A system for presenting a visual representation of a computing system is disclosed. The system comprises a matching engine that accesses a data store of patterns that can be used as composable design elements to map components of a computing system to a pattern. The system further comprises a visualizer that presents a graphical representation of a pattern mapped by the matching engine. Methods of using this system are also presented.

## Description

### CROSS-REFERENCE TO RELATED APPLICATIONS

This is an application claiming benefit under 35 U.S.C. §119(e) of U.S. Provisional Patent Application Serial No. 60/650,774, entitled "BASELINE ARCHITECTURE MONITOR APPLICATION FOR DISTRIBUTED SYSTEMS" and filed February 7, 2005. The entirety of the aforementioned application is hereby incorporated by reference.

### BACKGROUND

The design and implementation of business computing systems, especially distributed systems, is an increasingly complex task. In order to manage the complexities inherent in such an effort, various tools such as high-level programming languages and patterns have been developed. High-level programming languages generally allow computing instructions to be created and displayed in a human-readable form. Patterns are generally described as named problem-solution formulae that codify exemplary design principles. Patterns are usually implemented using a high-level programming language.

Implementers of distributed business systems devote significant resources, including time and money, to development efforts. Generally, a milestone in the development process is the completion of a baseline architecture upon which other components of the system will be built. A baseline architecture is usually created to, among other things, mitigate development risks and to validate the mechanisms contained within. Architectures of such systems severely tax, and usually exceed, the limits of high-level programming languages and patterns to adequately describe those systems. Therefore, a need exists for a system that can adequately represent system or architecture components at an appropriate level of abstraction and in readily understandable terms.

### SUMMARY

The following presents a simplified summary in order to provide a basic understanding. This summary is not an extensive overview. It is neither intended to identify key or critical elements of the invention nor to delineate scope. Its sole purpose is to present some concepts in a simplified form as a prelude to a more detailed description that is presented later. Additionally, section headings used herein are provided merely for convenience and should not be taken as limiting in any way.

A system and method for presenting a graphical depiction of an underlying architecture is presented. The system and method provide far various views into the system, with links to underlying components, including source code. The views are presented at differing levels of abstraction, including a level based upon patterns.

A system and method for using patterns as composable design elements is presented. The system and method provide an ability to design and build a computing system by using patterns as building blocks for the system.

The disclosed and described components and methods comprise the features hereinafter fully described and particularly pointed out in the claims. The following description and the annexed drawings set forth in detail certain illustrative examples. These examples are indicative, however, of but a few of the various ways in which the disclosed and described components and methods can be implemented. The disclosed and described components and methods are intended to include all such examples and their equivalents. Other examples and minor modifications to examples will become apparent from the following detailed description when considered in conjunction with the drawings.

### BRIEF DESCRIPTION OF THE DRAWINGS

FIG. 1 is a system block diagram of the baseline architecture monitor application system.

FIG. 2 is a system block diagram of a monitor component.

FIG. 3 is a system block diagram of an architecture mapping system.

FIG. 4 is a system block diagram of a pattern-based development environment.

FIG. 5 is system block diagram of a use case-driven development environment.

FIG. 6 is a system block diagram of a development environment that includes grammar capabilities.

FIG. 7 is a system block diagram of a meta-model development system.

FIG. 8 is a system block diagram of a multi-level testing system.

FIG. 9 is a system block diagram of the metric-based testing system.

FIG. 10 is a system block diagram of a security testing system.

FIG. 11 is a system block diagram of a view system.

FIG. 12 is a system block diagram of a transformation system.

FIG. 13 is a flow diagram depicting processing of a method that can be employed.

FIG. 14 is a flow diagram depicting processing of a method that can be employed.

FIG. 15 is a flow diagram depicting processing of a method that can be employed.

FIG. 16 is a flow diagram depicting processing of a method that can be employed.

FIG. 17 is a flow diagram depicting processing of a method.

FIG. 18 is a flow diagram depicting processing of a method.

FIG. 19 is a flow diagram depicting processing of a method.

FIG. 20 is a flow diagram depicting processing of a method.

FIG. 21 is a depiction of a graphical user interface.

FIG. 22 is a depiction of a graphical user interface.

FIG. 23 is a depiction of a graphical user interface.

FIG. 24 is a depiction of a graphical user interface.

FIG. 25 is a depiction of a graphical user interface.

FIG. 26 is a system block diagram of an exemplary operating environment,

FIG. 27 is a system block diagram of an exemplary computing platform.

### DETAILED DESCRIPTION

As used in this application, the terms "component," "system," "module," and the like are intended to refer to a computer-related entity, such as hardware, software (for instance, in execution), and/or firmware. For example, a component can be a process running on a processor, a processor, an object, an executable, a program, and/or a computer. Also, both an application running on a server and the server can be components. One or more components can reside within a process and a component can be localized on one computer and/or distributed between two or more computers.

Disclosed components and methods are described with reference to the drawings, wherein like reference numerals are used to refer to like elements throughout. In the following description, for purposes of explanation, numerous specific details are set forth in order to provide a thorough understanding of the disclosed subject matter. It may be evident, however, that certain of these specific details can be omitted or combined with others in a specific implementation. In other instances, certain structures and devices are shown in block diagram form in order to facilitate description. Additionally, although specific examples set forth may use terminology that is consistent with client/server architectures or may even be examples of client/server implementations, skilled artisans will appreciate that the roles of client and server may be reversed, that the disclosed and described components and methods are not limited to client/server architectures and may be readily adapted for use in other architectures, specifically including peer-to-peer (P2P) architectures, without departing from the spirit or scope of the disclosed and described components and methods. Further, it should be noted that although specific examples presented herein include or reference specific components, an implementation of the components and methods disclosed and described herein is not necessarily limited to those specific components and can be employed in other contexts as well.

A monitor application can include a graphical user interface (GUI) component to assist in presenting a description of a system architecture, including specifically a baseline architecture. As used in this document, the terms baseline architecture, or simply architecture, are used interchangeably and to describe not only a baseline architecture but also a baseline architecture with additional components. The GUI of the monitor application presents a visualization of a pattern that is being used as a composable element of design to both build and illustrate a running system. The monitor application can be used to present patterns as elements to depict a flow through a system at a higher level of abstraction than the binary or source code of the system.

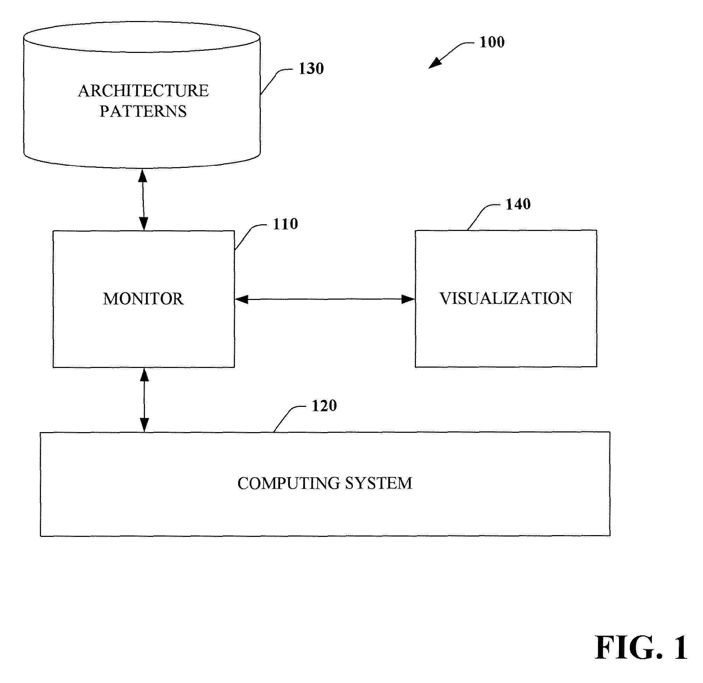

FIG. 1 is a system block diagram of the baseline architecture monitor application system 100. The baseline architecture monitor application system 100 can be used to discover both hardware and software components of an underlying computing system and to create a visualization of the discovered system that represents the system at varying levels of abstraction, including pattern-level abstractions that can represent hardware components, software components, or both hardware and software. The baseline architecture monitor application system 100 includes a monitor 110. The monitor 110 can access components of a computing system 120. The computing system 120 can include a wide variety of these components, including both hardware and software components. These hardware and software components can be, and in the business environment usually are, distributed across a wide range of interconnected machines and networks.

The monitor 110 can probe components of the computing system 120 to discover the existence and functionality of such components. In the case of hardware components, the monitor 110 can locate components that are directly connected to itself by polling on interconnection hardware such as buses or connection ports. Details of such polling procedures partly depend upon details and protocols applicable to a specific interconnection device. For example, a device that connects using a universal serial bus (USB) connection can be discovered using techniques and systems described by the USB protocol. Similarly, devices that connect using other types of connections can be discovered using techniques and systems described by protocols that are used by the respective connections.

In the case of remote hardware components that are interconnected through other components, such remote hardware components may or may not be available for the monitor 110 to poll directly. When remote hardware components cannot directly be polled, the monitor 110 can have another hardware component poll for the existence of remote hardware components on behalf of the monitor 110. The polling hardware components can then relay information about any located remote hardware components to the monitor 110. Other ways of discovering local and remote hardware components can be used.

When software components are being discovered, the monitor 110 can use several approaches to discover the existence of software applications and services provided by those applications. First, the monitor 110 can evaluate a type and identity of a located hardware component to determine whether the located hardware component is of a type that is known to run certain software or provide certain services. For example, if a discovered hardware component is a printer, the printer can be assumed to provide printing services along with certain print management functions.

If a discovered hardware component is a computer, the monitor 110 can send a request to an operating system of the computer asking the operating system to provide the monitor 110 with a list of all installed applications or running processes. The monitor 110 can then send messages to each application or process to obtain descriptions of services that can be provided by each respective application or process. Additionally or alternatively, the monitor 110 can use the list of applications or processes to look up services that are known to be provided by each application or process. Other ways of discovering applications, processes, or services can be used.

The monitor 110 can connect to an architecture data store 130. The architecture data store 130 can contain one or more architecture patterns. Architecture patterns are abstractions of architecture-level components of a computing system, such as the computing system 120. A pattern, including an architecture pattern, can be described by specifying four pieces of information. First, the pattern is given a name. Second, a description of a problem to which the pattern is generally applied is provided. Third, defining characteristics of the pattern are supplied. Finally, consequences of applying the design pattern are provided.

The name of the design pattern is an abstraction that can convey a substantial amount of information, specifically including information about the applicability and intent of the pattern. The description of the problem provides information regarding an environment and conditions that exist such that to it is appropriate to apply the design pattern. Characteristics of the pattern described as parts of the design of the pattern that can be adjusted such that the pattern can be used to apply to a variety of problems. Consequences of using the pattern provide information regarding ramifications of design decisions.

A wide variety of informational data structures can be used to represent a design pattern. Choice or design of such data structure is largely a matter dependent upon a specific implementation. Correspondingly, a wide variety of data stores can be used to implement the architecture data store 130. Among the possible data stores that can be used are a database, a text file, a structured text file such as a file formatted in accordance with specifications of extensible markup language (XML), an object, or another appropriate data storage format.

The monitor 110 can send information about the discovered hardware or software architectures to a visualization component 140. The visualization component 140 can take the information from the monitor 110 and present the information to a user in a graphical format that illustrates interconnections among the discovered components. In essence, the visualization component 140 can take the information from the monitor 110 and use that information to draw a picture of a computing system, such as the computing system 120. The picture, however, can be drawn to illustrate the computing system at a selected level of abstraction.

For example, the visualization component 140 can present a system block diagram of the hardware components of the computing system 120. The visualization component 140 can also create a pattern diagram that describes the computing system 120 as a system of interconnected patterns that cooperate within the system. Further, the visualization component 140 can represent the computing system 120 at a functional level and can provide an illustration of the computing system 120 as a system of interrelated and cooperating functions or services. Moreover, this, as well as other pattern-based representations (including representations that levels other than the pattern level) can provide a view of a computing system data that is independent of the underlying technology used to implement that computing system.

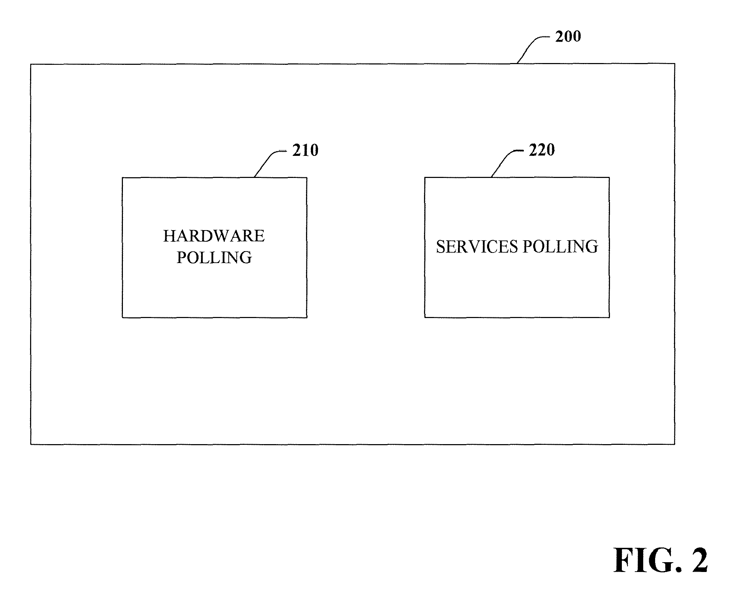

FIG. 2 is a system block diagram of a monitor component 200. The monitor component 200 can be used to discover hardware components and software components of a computing system, including a distributed computing system. The distributed computing system can include computers, networking devices, storage devices, and associated peripheral devices, as well as other components.

The monitor component 200 includes a hardware polling module 210. The hardware polling module 210 can query for hardware components that are directly connected to a hardware platform upon which the monitor component is running. It should be noted that although this example refers to the monitor component 200 as software in execution upon some hardware platform that includes a processing unit, it is contemplated that the monitor component 200, as well as other components disclosed and described herein, can also be implemented in hardware.

The hardware polling module 210 can also direct other components to poll for additional hardware components that are directly or indirectly connected to the hardware platforms to upon which the monitor component 200 is running. Such direction can be routed to components located more than one hardware layer away from the hardware upon which the monitor component 200 is running. Standard polling techniques, such as those applicable to devices that use standardize connection techniques like USB, Ethernet, or other standardized connections, can be used by the hardware polling module 210 to discover interconnected hardware components.

The monitor component 200 also includes a services polling module 220. The services polling module 220 can query for existing services that can be provided by components detected by the hardware polling module 210. This information can be used by the monitor component 200 to provide an abstraction of hardware and software discovered by the hardware polling module 210 and the services polling module 220. Such an abstraction can include one or more patterns.

The services polling module 220 can discover existing services in a variety of ways. With some components, it is possible to query the component to obtain a list of services that can be provided by the component. For example, the services polling module 220 can send a message to a process running on a component to discover an identity of the process, along with identities of any threads or sub-processes. A process identity can be matched to a list of known services provided by that process. Additionally or alternatively, the process can provide its own list of services to the services polling module 220. Furthermore, other methods or procedures can be used to discover the existence of services.

The system allows for patterns to be used to provide views into an underlying computing system. The patterns allow representations of systems during actual operation at levels of abstraction not previously possible. By navigating through views at different levels of abstraction, a user can gain a fuller appreciation and understanding of the architecture and functioning of the underlying system.

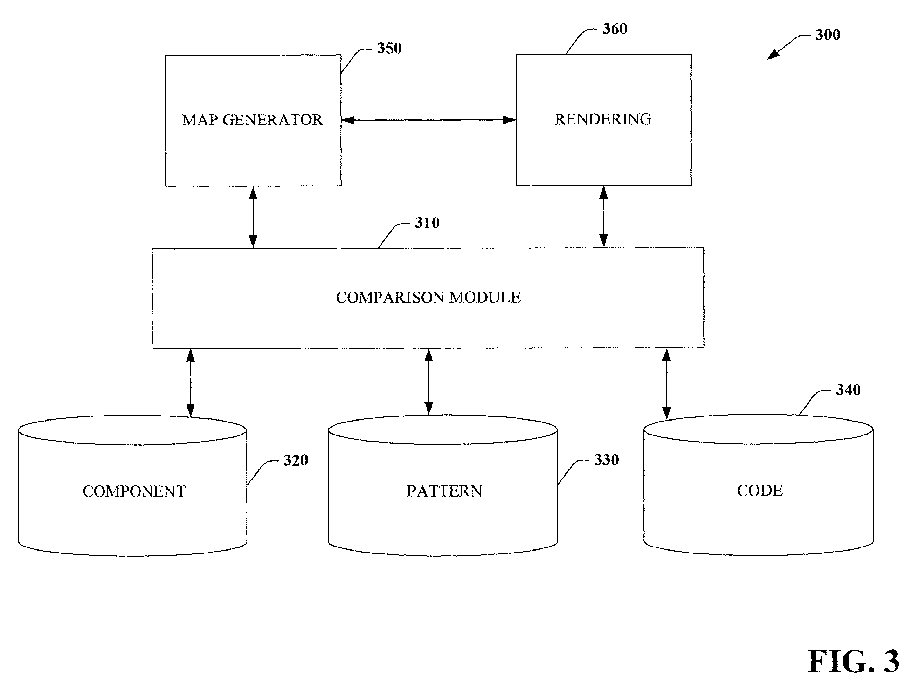

FIG. 3 is a system block diagram of an architecture mapping system 300. The architecture mapping system 300 can be used as part of a visualization module, such as the visualization module 140 described in conjunction with FIG. 1. Additionally, the architecture mapping system 300 can be used to identify differences between a pattern and an actual component of the system, such as the computing system 120 described with reference to FIG. 1. Further, the architecture mapping system 300 can compare source code to a pattern to generate a pattern-based map of the source code.

The architecture mapping system 300 includes a comparison module 310. The comparison module 310 can access a component data store 320. The component data store 320 can include representations of hardware and software components of a computing system. It should be noted that the hardware and software component representations included in the component data store 320 are not necessarily representations of components detected in an already running system. Additionally or alternatively, the hardware and software component representations can be idealized representations of normalized or standard components that can be present in a computing system. Specifics of such representations are largely a function of a particular implementation or component.

The comparison module 310 can also access a pattern data store 330. The pattern data store 330 can include representations of patterns that can describe various components of a computing system. As with the component data store 320, the pattern data store 330 does not necessarily include representations of components that have been detected in the present system, but can additionally or alternatively include patterns that can be used to describe other components. Patterns included in the pattern data store 330 can be normalized such that each pattern represents a consistent component or group of components a developer can rely upon to include certain features or functions. Normalization of patterns can include generalization and specialization composition as well as aggregation to enable those patterns to be used as composable elements of design at the subsystem, process, thread, or object levels.

A code data store 340 can also be accessed by the comparison module 310. The code data store 340 can include software code that can be linked to, or is represented by, a pattern that is included in the pattern data store 330. The code included in the code data store 340 can be computer code that is created using a high-level programming language such as C, C++, Java, or another high-level programming language. It is also possible for the code data store 340 to store compiled binary versions or object code, or even fully compiled stand-alone applications, among other things.

A map generator 350 can access the comparison module 310 and the pattern data store 330 to create a map of a computing system, such as the computing system 120 discussed previously with reference to FIG. 1. This map can be a representation of the components of the computing system, including representations for the interconnections between or among such components. The map representation can be implemented in a variety of ways, such as a graph, a directed graph, or a linked list, among others. Implementation details for the map generator 350 can depend upon a specific data structure or type of representation chosen to represent the computing system.

A rendering module 360 can access the map created by the map generator 350 to provide a graphical representation of the map. Specifically, an icon, a picture, or some other graphical indicator can correspond to one or more components of the map. The rendering module 360 can cause the map to be displayed as a set of interconnected or interrelated graphical indicators that display a view of the computing system represented by the map that is inappropriate or preselected level of the abstraction. In this example, the level of abstraction discussed is the pattern level. However, other levels of abstraction can be used, such as a functional level or any of the other levels discussed herein.

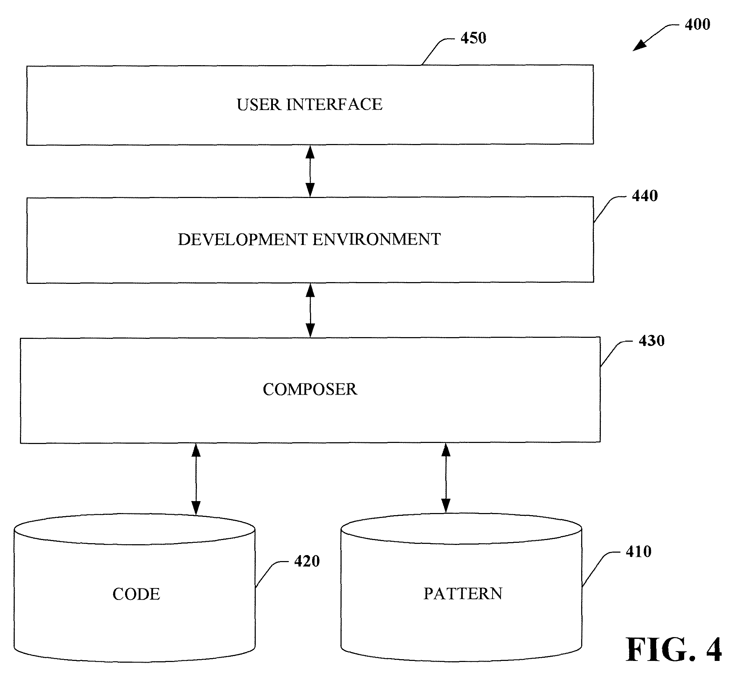

FIG. 4 is a system block diagram of a pattern-based development environment 400. The pattern-based development environment 400 and can be used to develop software and systems by treating patterns as composable elements of design in a development environment. By treating patterns as composable elements, a systems developer can aggregate, organize, and assemble groups of patterns to create robust computing systems, including distributed computing systems.

The pattern-based development environment 400 includes a pattern data store 410. The pattern data store 410 includes representations of design patterns that can be used as building blocks during system development. Patterns include in the pattern data store can be reified patterns associated with component responsibility collaborator (CRC) design principles. These reified patterns can include an executable CRC interface that can be used to find a collaborator within a pattern-based abstract syntax graph. Such reified patterns can be used while validating system design responsibilities using responsibility test-driven design.

A code data store 420 can include machine readable computer code. The machine readable computer code can be associated with one or more of the patterns and included in the pattern data store 410. As with the code data store 340 discussed in conjunction with FIG. 3, the code data store 420 can include machine readable code in a high-level programming language, object code, binary code, or stand alone applications, among other types. Both the pattern data store 410 and the code data store 420 can be implemented in any suitable fashion, including as a database, an object, a text file, a structured text file, or in some other fashion.

A composer 430 can access the pattern data store 410 and the code data store 420. The composer 430 can manipulate and join patterns from the pattern data store 410 and code associated with those patterns from the code data store 420 to create an integrated representation or code block, respectively. Details related to implementing the composer 430 are dependent on such factors as a specific representation format to a chosen for patterns of the pattern data store 410, as well as the type or representation chosen for code included in the code data store 420. Generally, the composer 430 can obtain code from the code data store 420 that is associated with a pattern of the pattern data store 410 and integrate that code with other pieces of code that relate to other patterns.

A development environment 440 can serve as a platform for a developer to integrate multiple patterns into a representative system. The development environment 440 can include such components as compilers, grammar and syntax checkers, and other typical software development tools. The development environment 440 can ensure that patterns that are used as building blocks for system properly connected together in a logical fashion. For example, the development environment 440 can check to see whether a developer has linked to patterns together that cannot directly interface with each other and identify that situation so that the developer can take corrective action.

A user interface 450 can interact with the development environment 440 to provide a convenient and useful interface to the development environment 440. The user interface 450 can be any human-computer interface, such as a command line or other text-driven interface. A graphical user interface (GUI) can be especially useful when dealing with patterns that have associated graphical indicators. In this example, a developer can use the user interface 450 of the pattern-based development environment 400 to manipulate graphical depictions of patterns to build systems. For instance, a developer can use a mouse or another pointing device to grab a graphical indicator of a pattern from a palette containing the group of such indicators, drag the graphical indicator to a composition pane, and drop the graphical indicator into the pane to use the pattern as part of a system under construction.

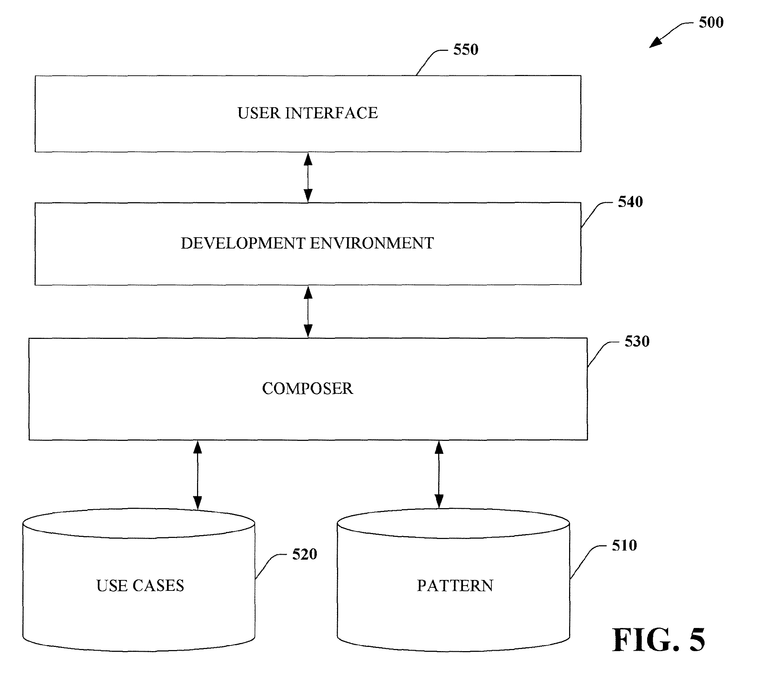

FIG. 5 is system block diagram of a use case-driven development environment 500. The use case-driven development environment 500 can be used to create computing systems by manipulating objects at a functional level as defined by use cases. By allowing a developer to build a system by selecting representations of use cases to include in the system, a developer can ensure that functionality called-for by system design documents, such as requirements documents, is included in the finished system.

A use case is a description of how a user interacts with a computing system. This description can include information regarding tasks or functions that are performed by the user, definitions of, or specifications for, system information that the user can acquire, produce, or change, indicators regarding whether a user informs the system about changes in an external environment, definitions of or specifications for information that the user desires to obtain from the system, and specifications regarding whether the user should be informed about the expected changes. The use case description can be represented in a variety of data formats and is largely an implementation decision.

Representations of use cases can be stored in a use case data store 510. The use case data store 510 can be associated with a code data store 520. The code data store 520 can include machine readable code in a high-level programming language, object code, binary code, or stand alone applications, among other types. Individual pieces of code in the code data store 520 can be associated with representations of use cases in the use case data store 510.

The use case-driven development environment 500 also includes a composer 530. The composer 530 can access the use case data store 510 and the code data store 520 to manipulate and join use cases and code associated with those use cases to create an integrated representation or code block, respectively details related to implementing the composer 530 are largely dependent on such factors as a specific representation formats chosen for use cases of the use case data store 510, along with formats of contents the code data store 520. Generally, the composer 530 can obtain code from the code data store 520 that is associated with a use case from the use case data store 510. The composer 530 can then integrate the code from the code data store 520 with other code segments that relate to the use cases to create an integrated block.

A development environment 540 can provide a platform for a developer to combine and integrate multiple use cases into a cohesive system. The development environment 540 can include subcomponents such as compilers, grammar checkers, syntax checkers, and other typical software development tools.
The development environment 540 can also determine whether use cases that a developer is using to build an integrated system can properly be linked together in the way specified by the developer. For example, the development environment 540 can check to see whether two connected use cases can be directly linked together or whether one or more intermediate use cases should or must be interposed between the two original use cases.

The use cases-driven development environment 500 includes a user interface 550 that provides access to the system by the developer. The user interface 550 can be any suitable human-computer interface including a command line-driven interface or some other text-driven interface. A graphical user interface can be especially useful when a developer is manipulating use cases that have associated graphical indicators or identifiers. In such a situation, a developer can use a mouse or another pointing device to select a graphical indicator that is associated with a use case and drag that graphical indicator to a composition pane. A developer can construct a system by dragging and dropping graphical indicators associate with use cases into the composition pane to connect the graphical indicators together to design and build a complete system.

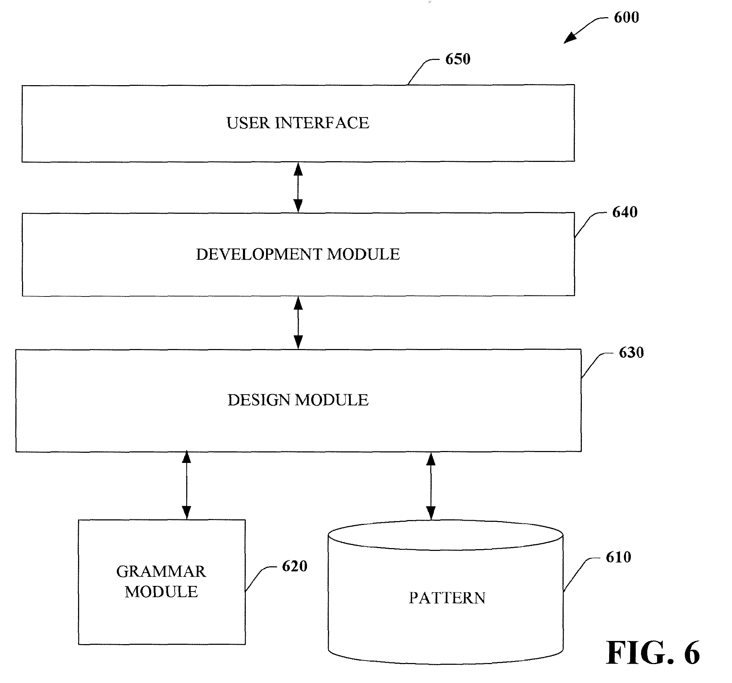

FIG. 6 is a system block diagram of a development environment 600 that includes grammar capabilities. The development environment 600 includes a pattern data store 610. The pattern data store 610 includes normalized patterns that can be used as composable building blocks for system design and construction. A group of such patterns can be analyzed and arranged to form a type of high-level computing language such that patterns themselves can be used to build systems in accordance with established rules. A high-level computing language constructed in such a manner can have a grammar and syntax that can be used to enforce rules of construction for the language. The grammar can be a context-free grammar that uses patterns as an input. This language can be translated to a structure of executable elements.

For example, the pattern data store 610 can include three patterns that are designated A, B, and C. A rule of the language that includes A, B, and C could be that A can never directly precede C. A grammar module 620 can parse a representation created by a developer to ensure adherence to this rule. The grammar module 620 can access a design module 630 that can access the pattern data store 610. Patterns can be linked together by the design module 630 with input from the grammar module 620 to ensure that linkages follow grammatical rules of the language. Linked patterns are executable elements that form an overall computing system.

Patterns represent some state of knowledge in development of computing systems. This knowledge can be applied to engineer systems based on collaborating elements in a variety of ways. One way is by building an abstract syntax tree that includes patterns as elements. Each node in the abstract syntax tree can be visited and unfolded by using the template method to convert the abstract syntax tree into an abstract syntax graph. The abstract syntax graph can then be used in a variety of ways including those discussed herein.

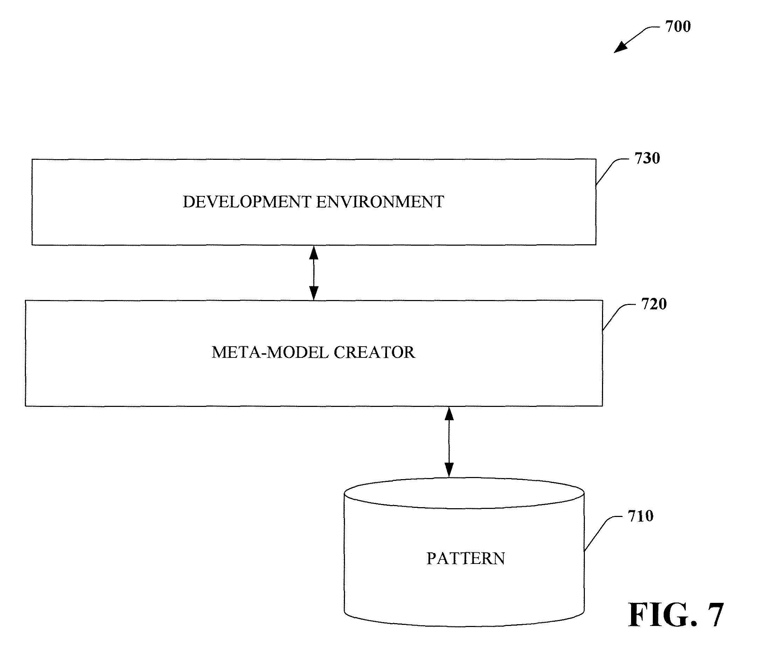

FIG. 7 is a system block diagram of a meta-model development system 700. The meta-model development system 700 can be used during various system development efforts to assist in creating a pattern-based computing system. Specifically, the meta-model development system 700 can create a meta-model of a computing system that can be evaluated and tested for system completeness and correctness.

The meta-model development system 700 includes a pattern data store 710. The pattern data store 710 can include a group of patterns that can be used as composable elements of design in system building. A meta-model creator 720 can access patterns from the pattern data store 710 and supply information about those patterns to development environment 730. The development environment 730 can provide a platform upon which a developer can manipulate patterns from the pattern data store 710 to design and build a computing system. The meta-model creator can use that design from the development environment 730 along with information derived from the patterns included in that design to create the meta-model of the computing system. This meta-model can then serve as a basis for conceptual testing or visualization.

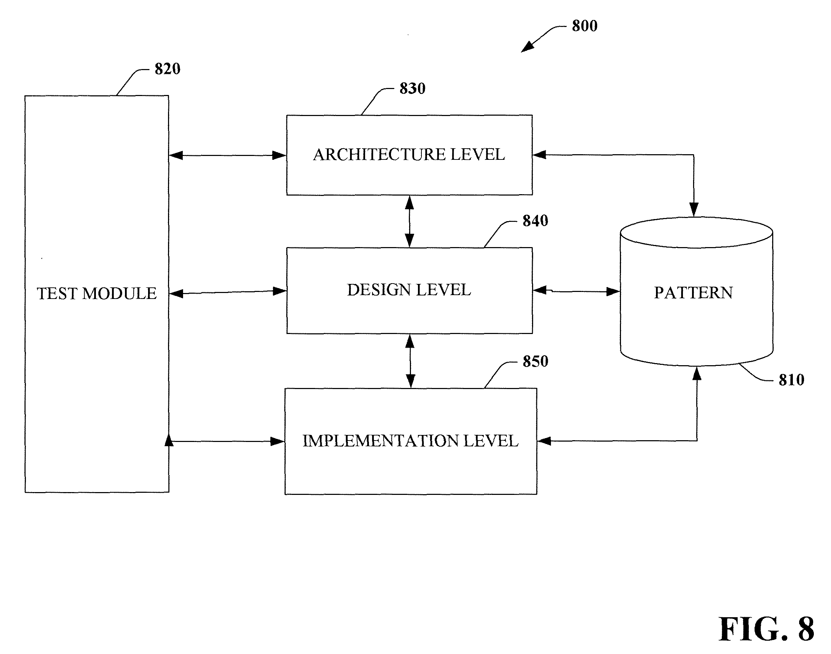

FIG. 8 is a system block diagram of a multi-level testing system 800. The multi-level testing system 800 can be used to test a computing system at a variety of levels during the design process and after implementation. Such testing can help identify or prevent the introduction of design flaws or errors during the design process. Implementation errors can also be identified and corrected prior to deploying a newly designed computing system.

The multi-level testing system 800 includes a pattern data store 810. The pattern data store 810 includes a group of normalized patterns that can be used as composable building blocks for a computing system. A testing module 820 can use patterns of the pattern data store 810 to evaluate system components and identify design or implementation errors. The testing module 820 can, among other things, execute test scripts to follow threads of execution through components at each accessed level. Execution errors during execution of the test script can be logged or otherwise identified for later correction.

The testing module 820 can access an architecture level 830. The architecture level 830 includes a system representation the architecture level or alternatively, an architecture-level view of the representation of a computing system. A design level 840 includes a system representation at the design level, or alternatively, a design level view of a representation of a computing system. An implementation level representation of a computing system, or alternatively, an implementation level view of a representation of a computing system is included in implementation level 850.

The testing module 820 can access the design level 840 in the implementation level 850 in addition to the architecture level 830. Testing scripts design to be run design level in the implementation level can be executed by the testing module 820 to identify design or implementation errors. Multi-level testing such as this can thoroughly test a variety of aspects of the system with the goal of more complete system testing prior to actual deployment of the newly designed system. Such tests can be run at various milestones during the development process and as development continues, can be run in parallel to ensure that design efforts at one level do not have unexpected results at other levels.

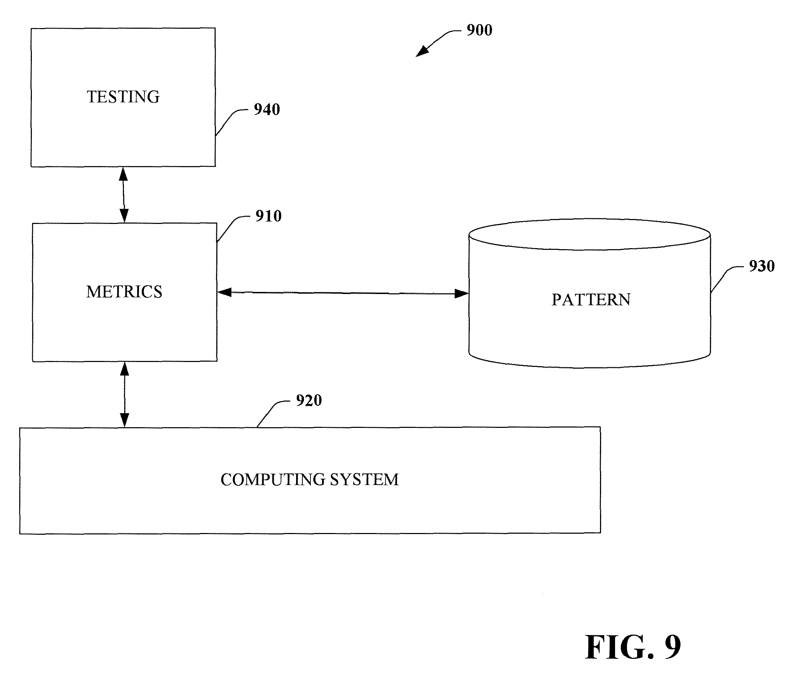

FIG. 9 is a system block diagram of the metric-based testing system 900. The metric-based testing system 900 can be used to test various operational aspects of a computing system. This testing capability can be especially useful to identify operational problems with a newly designed system so that such problems can be corrected. Additionally or alternatively, the metric based testing system 900 can be used to obtain operational metrics with a view toward identifying system components that can be optimized or otherwise improved upon.

The metric-based testing system 900 includes a metric module 910. The metric module 910 can access components of a computing system 920 that can specifically measure various operational parameters of those components. For example, the metric module 910 can access the database to measure query response times and determine an average response time to queries run against that database. Selection and measurement of appropriate metrics are implementation dependent.

A pattern data store 930 can supply information about patterns that can be used as composable elements of design to the metric module 910. The metric module 910 can use that information to group or otherwise aggregate measured metrics and associate those metrics with a specific pattern. Associated metrics can be presented at a pattern level to give performance indicators for pattern-based components of the computing system.

A testing module 940 can access the pattern-level metrics and analyze those metrics to provide insight into potential implementation problems. For example, the testing model 940 can compare measured metrics from the metric module 910 against expected or idealized values for those components. Such a comparison can be probability based such that a range of normal or expected values is used during the comparison or some other probability-based comparison can be used to evaluate performance of a pattern-based component. Metric values that fall outside an expected range can indicate potential problems with implementation of the pattern at software or hardware levels. At the software level, low performance numbers can indicate errors in coding or a need to improve process algorithms. At the hardware level, low performance numbers can indicate that insufficient hardware based computing resources are being used in the implementation. Higher than expected performance metrics to indicate successful optimizations, unexpected efficiencies, or an overabundance of computing resources. Other causes and effects are possible and will be apparent to those of ordinary skill in the art.

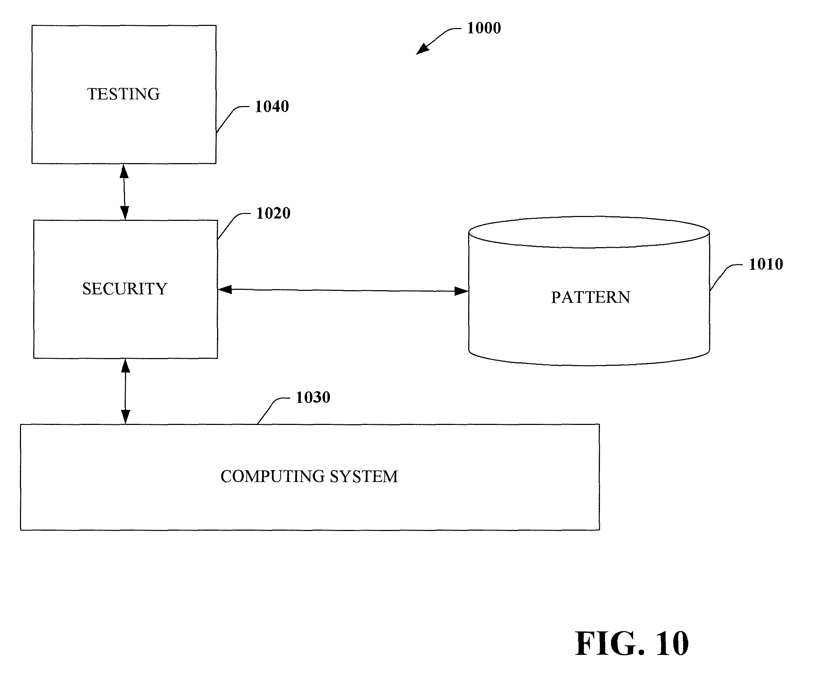

FIG. 10 is a system block diagram of a security testing system 1000. The security testing system 1000 can provide a basis for identifying and eliminating security flaws present in a newly designed system. Security testing can be especially effective during the design stage and early stages of implementation. Systems that are designed with security in mind can have fewer security flaws than other systems that rely solely on post-implementation testing and patching to address security concerns.

The security testing system 1000 includes a pattern data store 1010. The pattern data store 1010 includes a group of normalized patterns that can be used as composable design elements. A security module 1020 can access an underlying computing system 1030 and identify patterns in the pattern data store 1010 used to construct the computing system 1030. The identified patterns can be subjected to security testing by probing for known or likely security flaws.

For example, a pattern can call for specified data inputs. A common security flaw with any input is the existence of an unbounded buffer that allows for a buffer overflow resulting in a computing system executing arbitrary code not intended by the developer. The security module 1020 can identify the potential problem with use of the pattern and test for its existence by attempting to overflow buffers with arbitrary executable data. A security testing scenario can be created for each identified potential problem with a pattern.

The security module 1020 can send results of its efforts to a testing module 1040. The testing module 1040 can integrate security information with other testing information and present results to a developer. It should be noted that such security testing can be performed on a computing system that remains unimplemented as well as on an already implemented and running system.

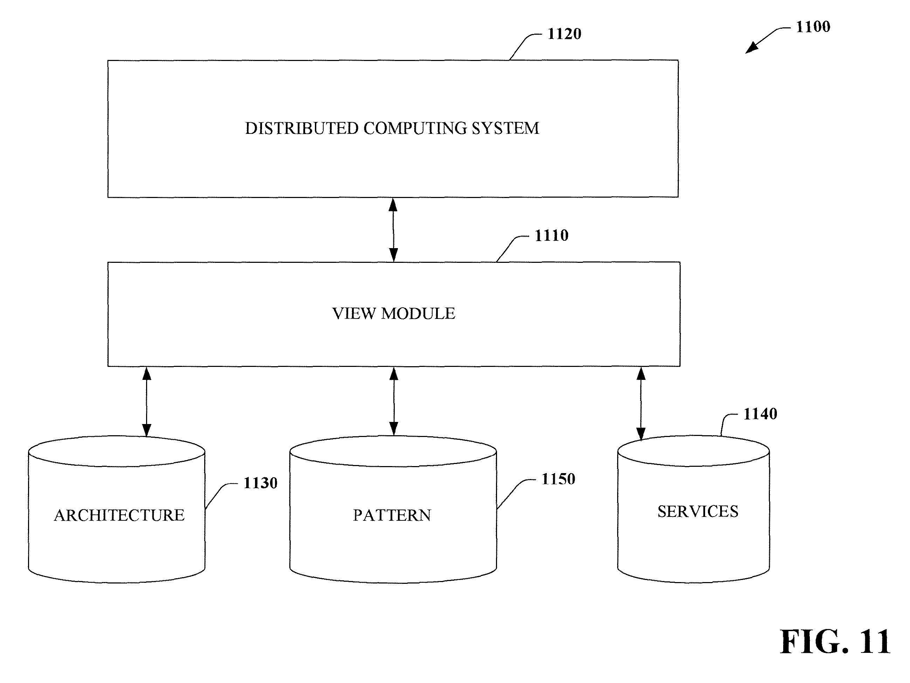

FIG. 11 is a system block diagram of a view system 1100. The view system 1100 can be used to present differing aspects of a computing system to a developer or user. The view system 1100 includes a view module 1110. The view module 1110 can access representations of various components of a distributed computing system 1120. Specifically, the view module 1110 can access an architecture data store 1130 that includes architecture level representations of components of the distributed computing system 1120. A service data store 1140 can include representations of services is that are provided by the distributed computing system 1120. A pattern data store 1150 can include representations of patterns that comprise the distributed computing system 1120.

The view module 1110 can access these data stores to obtain information about how to represent the distributed computing system 1120 as a whole to a user. A user can select from among different views, and such as an architecture view, the services view, or a pattern view, among others to gain further insights into the design, construction, or operation of the distributed computing system 1120. To create such views, the view module 1110 can map components available from the various data stores that are contained within the distributed computing system 1120 to graphical indicators of those components. The view module 1110 can then present those graphical indicators to user as a view of the distributed computing system 1120.

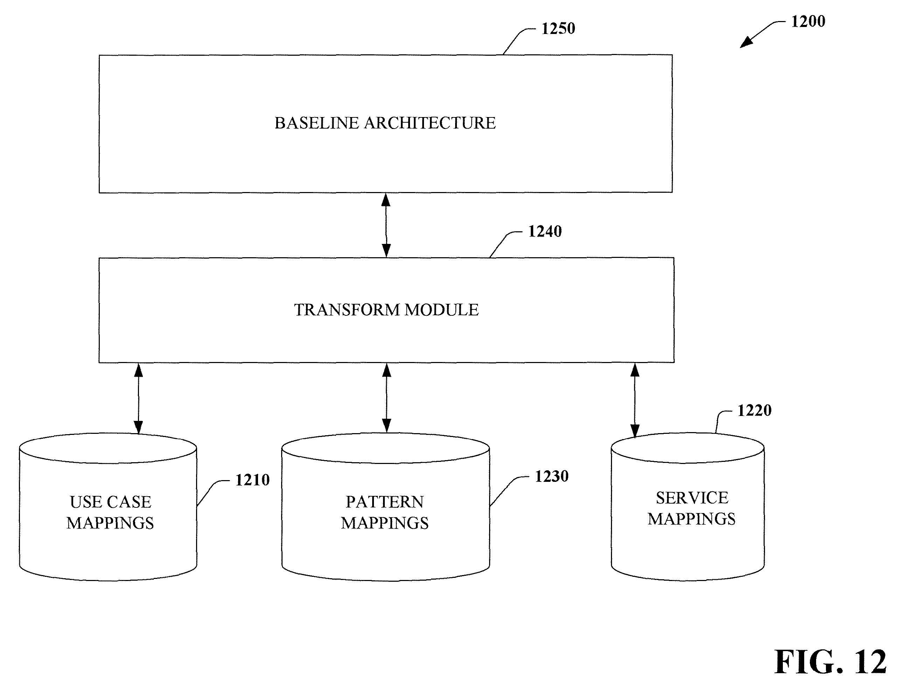

FIG. 12 is a system block diagram of a transformation system 1200. The transformation system 1200 can be used to convert from one representation of a system to a baseline of architecture of that system. The transformation system 1200 includes a use case mapping data store 1210. The use case mapping data store 1210 can include some mappings from use cases used to design a computing system to architectural components that can be used to implement that system. A service mapping data store 1220 can include mappings from services to architectural components that can provide those services. A pattern mappings data store 1230 can include mappings from pattern is to components that can be used to implement the patterns.

A transform module 1240 can access the described mappings data stores and convert a mapping to an architecture component. A transform module 1240 can aggregate and assemble a group a of architecture components to create a baseline architecture 1250. The baseline architecture 1250 represents the first implementation of a complete system. That architecture can be studied, tested, and modified, or extended as desired.

The components disclosed and described herein, for example in connection with detection or identification tasks, can employ various artificial intelligence-based schemes for carrying out various tasks. For example, mapping of source code-level functions to patterns can be facilitated by using an automatic classifier system and process. Moreover, an automatic classifier system can be used to identify hardware or software components as parts of use cases or patterns.

A classifier is a function that maps an input attribute vector, *X = (x*_{*1*}*, x*_{*2*}*, x*_{*3*}*, x*_{*4*}*, ...* xₙ), to a confidence that the input belongs to a class, that is, *f(X)* = *confidence(class).* Such a classification can employ a probabilistic and/or statistical-based analysis (for example, factoring into the analysis utilities and costs) to prognose or infer an action that a user desires to be automatically performed. In the cases of systems described herein, classifiers can be especially useful in pattern matching and functions involving probabilistic comparisons or evaluations.

A support vector machine (SVM) is an example of a classifier that can be employed. The SVM operates by finding a hypersurface in the space of possible inputs, which hypersurface attempts to split the triggering criteria from the non-triggering events. Intuitively, this makes the classification correct for testing data that is near, but not identical to training data. Other directed and undirected model classification approaches include, for example, naive Bayes, Bayesian networks, decision trees, and probabilistic classification models providing different patterns of independence can be employed. Classification as used herein also is inclusive of statistical regression that is utilized to develop models of priority.

As will be readily appreciated from this specification, the components disclosed and described herein can employ classifiers that are explicitly trained (for example, by a generic training data) as well as implicitly trained (for example, by observing user behavior, receiving extrinsic information). For example, SVMs are configured by a learning or training phase within a classifier constructor and feature selection module. Thus, the classifier(s) can be used to automatically perform a number of functions including but not limited to determining whether a function is properly mapped to a pattern.

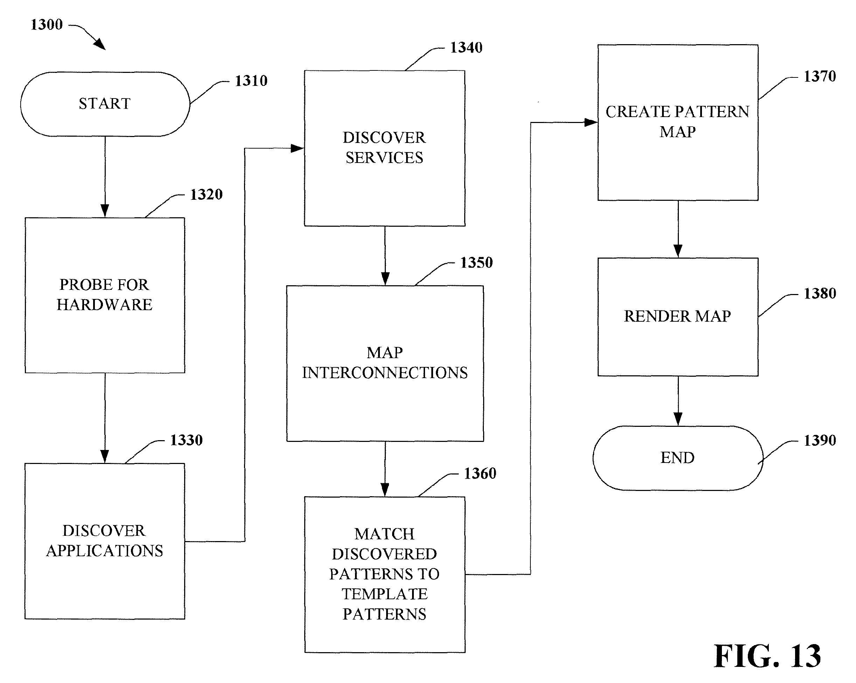

With reference to FIGs. 13 - 20, flowcharts are presented. While, for purposes of simplicity of explanation, the one or more methodologies shown herein, for example, in the form of a flow chart, are shown and described as a series of acts, it is to be understood and appreciated that the disclosed and described components and methods are not limited by the order of acts, as some acts may occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology.

FIG. 13 is a flow diagram depicting processing of a method 1300 that can be employed with components disclosed and described herein. The method 1300 can be used to create a visualization of a computing system. This visualization can then be used for further analysis of the computing system.

Processing of the method 1300 begins at START block 1310 and continues to process block 1320. At process block 1320, probing for hardware components of a computing system occurs. Processing continues to process block 1330 where software applications resident on the computing system are discovered. Software services or other services available from components of the computing system are discovered at process block 1340.

Processing continues to process box 1350 where interconnections between or among computing components are mapped. At process block 1360, patterns discovered in the mapping of the computing components are matched to template pattern. This matching can be done as an approximation or best fit against a normalized or ideal pattern. A pattern map is created at process block 1370. At process block 1380, the pattern map is rendered for observation. Processing terminates at END block 1390.

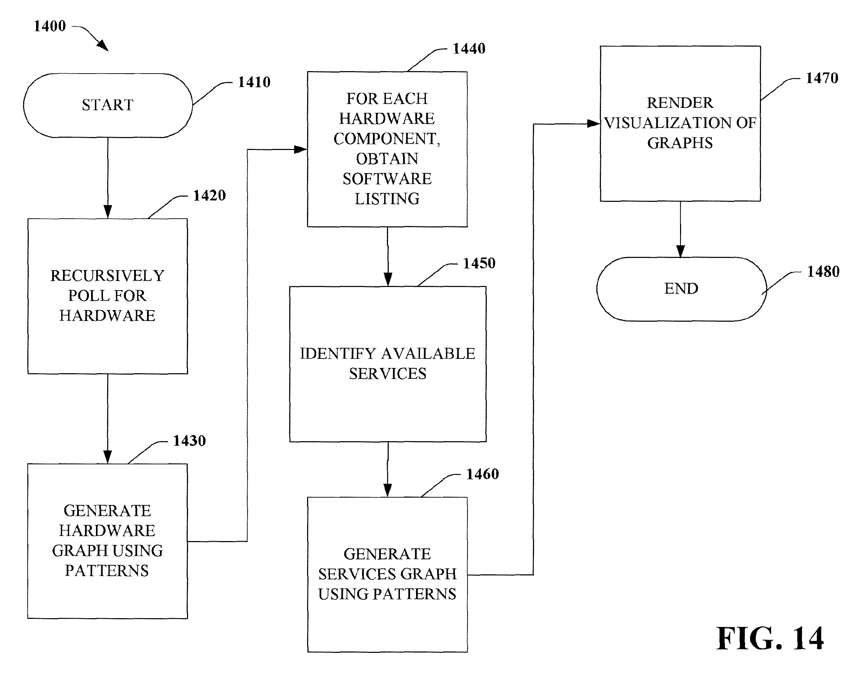

FIG. 14 is a flow diagram that illustrates processing of a method 1400 that can be used in accordance with another aspect of the disclosed invention. The method 1400 can be used to identify or discover components of a computing system. These components can specifically include hardware, software, services, or other identifiable features of the computing system. Information generated by this method can be used for further design or development efforts.

Execution of the method 1400 begins at START block 1410 and continues to process block 1420. At process block 1420, a poll is conducted to locate all attached hardware components of the system. This poll can be conducted recursively by having located hardware components conduct polls for additional components connected to those already located. Processing continues to process block 1430 where a hardware graph using pattern is generated to represent the hardware components located during polling. At process block 1440, a list of software or applications that are resident on each located piece of hardware is obtained.

Services that can be provided by each piece of software or application are identified at process block 1450. Such identification can be performed by querying the software are application directly, by accessing a list of services that are known to be provided by a software or application, by a combination of these methods, or by another suitable method entirely. At process block 1460, a services graph is generated, using patterns as a graph basis. At process block of 1470, a visualization of the created graphs is rendered for a user. Processing concludes at END block 1480.

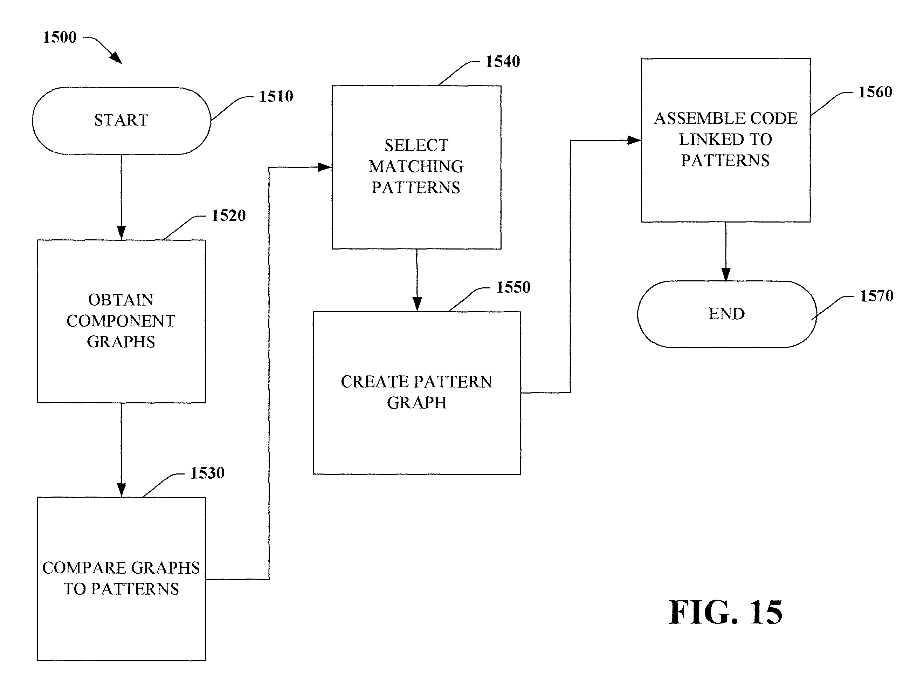

FIG.15 is a flow diagram of a method 1500 that can be used with components disclosed and described herein. The method 1500 is a high-level processing flow for generating or assembling software code with reference to patterns that are used as composable design elements when building a computing system. Software code assembly can occur as a process that is hidden from and end user.

Execution of the method 1500 begins at START block 1510. Processing continues to process block 1520 where component graphs are obtained for components of a designed system. Components can include hardware, software, services, or other identifiable components. The component graphs are compared to patterns at process block 1530. This comparison can be performed probabilistically or as a best fit procedure. At process block 1540, patterns that match component graphs or sub-graphs are selected.

Processing continues to process block 1550 where a pattern graph is created. The pattern graph can be a pattern-level representation of the computing system being designed. At process block 1560, code that is linked to patterns of the pattern graph is assembled in accordance with the pattern graph. Processing concludes at END block 1570.

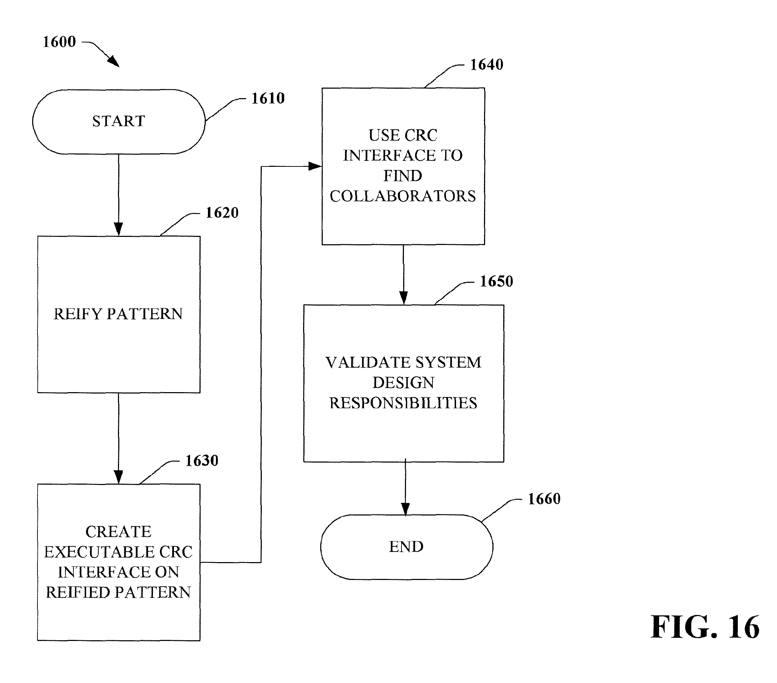

FIG. 16 is a flow diagram of a method 1600 that can be employed with components disclosed and described herein. The method 1600 can be used to create normalized design patterns. These normalized design patterns can be used as composable design elements for system design.

Processing of the method 1600 begins at start block 1610. Processing continues to process block 1620 where a design pattern is reified. Reification can include creating data structures or other computer-implemented representations of a design pattern. At process block 1630, executable component responsibility collaborator (CRC) interfaces are created and applied to the design pattern.

Processing continues to process block 1640 where the component responsibility collaborator interfaces are used to find collaborators. System design responsibilities are validated at process block 1650. Processing of the method 1600 terminates at END block 1660.

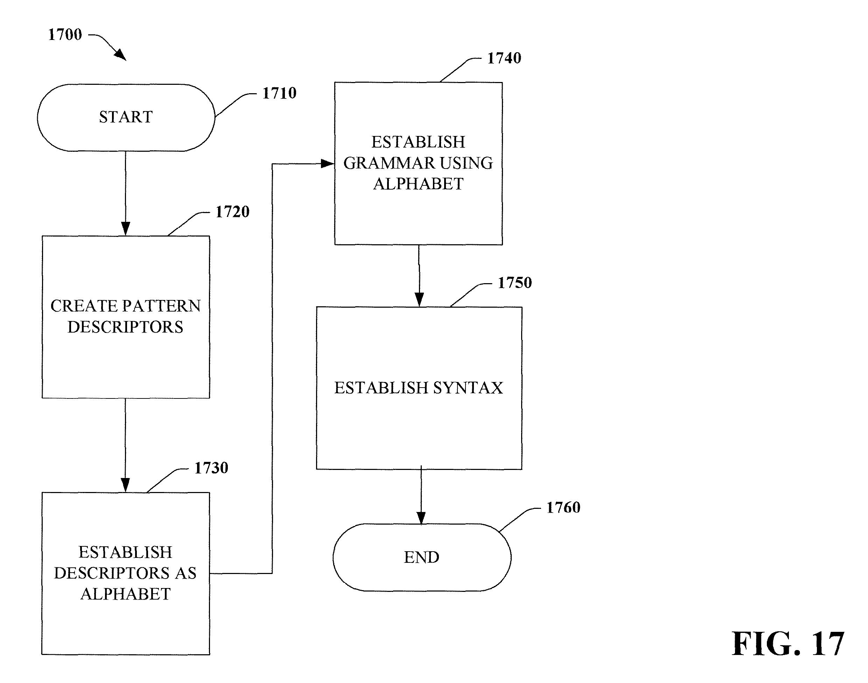

FIG.17 is a flow diagram of a method 1700 that can be used with components disclosed and described herein. The method 1700 can be used to create a composition language from patterns. Such language can be used as part of construction of a pattern-based computing system.

Processing of the method 1700 begins at START block 1710. Pattern descriptors are created at process block 1720. Such descriptors can take a wide variety of forms. In this example, the descriptors are capable of being used as an alphabet from which a composition language can be formed. Processing continues to process block 1730 where the pattern descriptors are established as a baseline alphabet. At process block 1740, a grammar that uses the alphabet is established. A syntax for the language is established at process block 1750. Processing terminates at END block 1760.

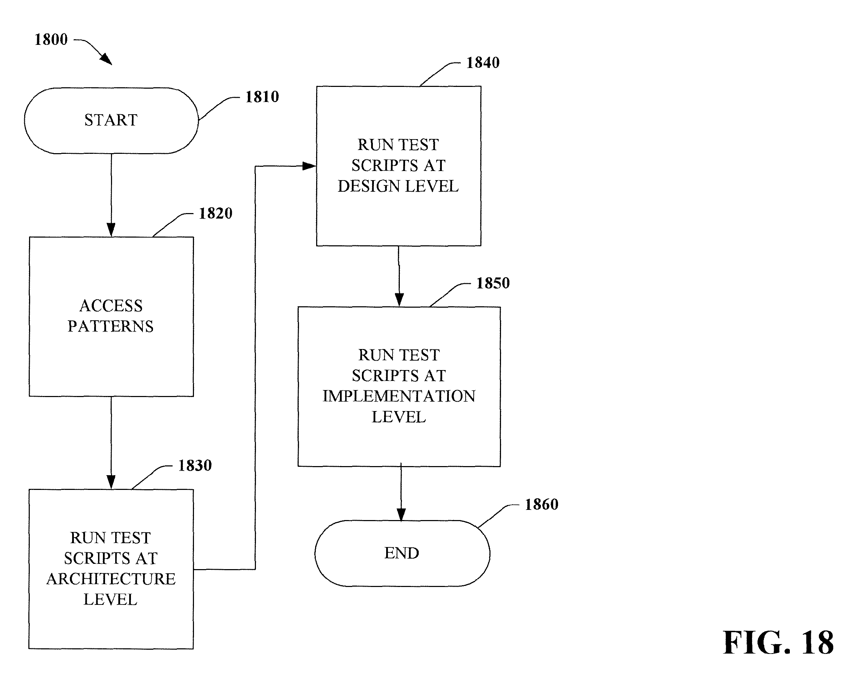

FIG. 18 is a flow diagram of a method 1800 that can be used with components disclosed and described herein. The method 1800 can be used to test a designed pattern-based computing system on multiple levels. Such testing can potentially identify flaws in architectural arrangements, software design, or in implementation.
Processing of the method 1800 begins at start block 1810. Processing continues to process block 1820 where patterns that can be used as composable design elements are accessed. At process block 1830, a series of test scripts are run on a representation of a computing system at the architectural level. These test scripts can be designed to exercise every possible interconnection between or among architectural components.

At process block 1840, processing continues by running test scripts on a representation of the computing system at the design level. As with the test scripts running at the architectural level, the design level test scripts potentially examine every interconnection at the design level. Processing continues at process block 1850 where test scripts are run at the implementation level of the computing system. Such test scripts can identify actual implementation problems so that such problems can be corrected. Processing of the method 1800 concludes at END block 1860.

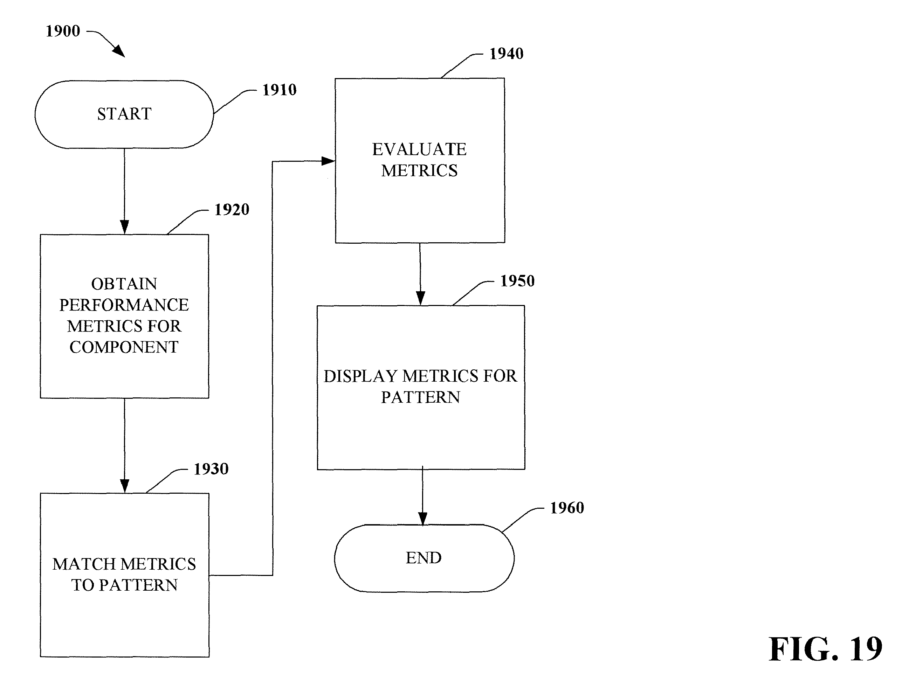

FIG. 19 is a flow diagram of a method 1900 that can be used with components disclosed and described herein. The method 1900 can be used to measure performance aspects of an implemented system. Such performance measures or metrics can be used to identify implementation issues or areas to focus on for optimization efforts.

Processing of the method 1900 begins at start block 1910 and continues to process block 1920. At process block 1920, performance metrics for a computing system are obtained. The obtained performance metrics are matched to a pattern that can be used as a composable design element at process block 1930. At process block 1940, the obtained performance metrics are evaluated in light of expected or ideal performance metrics. Such evaluations can be probability based or in accordance with some benchmark procedure. Processing continues at process block 1950 where metrics associated with each pattern are displayed. Processing concludes at END block 1960.

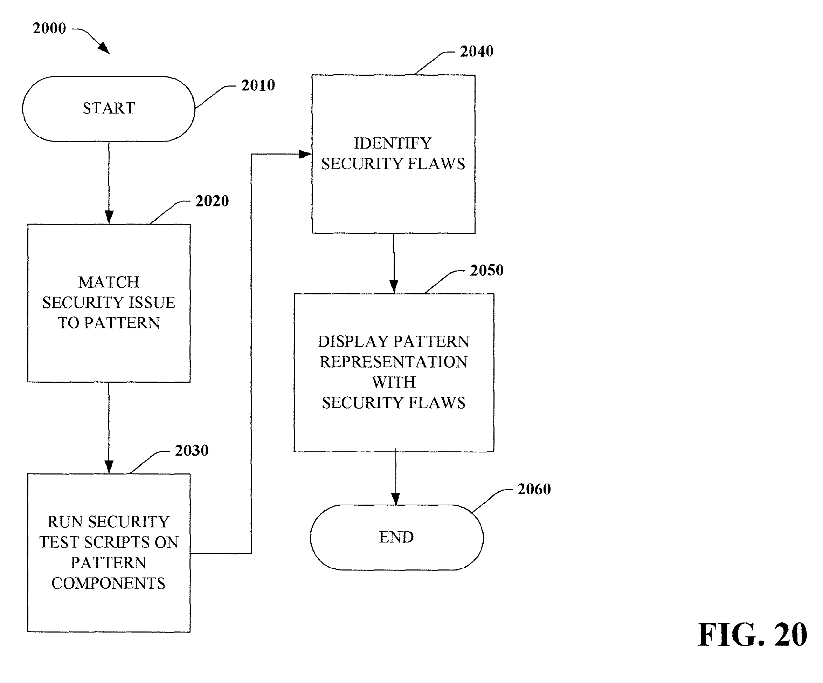

FIG. 20 is a flow diagram of a method 2000 that can be employed with components disclosed and described herein. The method 2000 can be used to evaluate an overall security status for a pattern-based computing system. Such evaluations can be used to correct security flaws and improve overall security of the computing system.

Processing of the method 2000 begins at start block 2010. Processing continues to process block 2020 where an identified security issue is matched to a pattern that can be used as a composable design element. At process block 2030, security test scripts are run on the patterns. Security flaws are identified process block 2040. Such security flaws are associated with the respective pattern and displayed at process block 2050. Processing concludes at END block 2060.

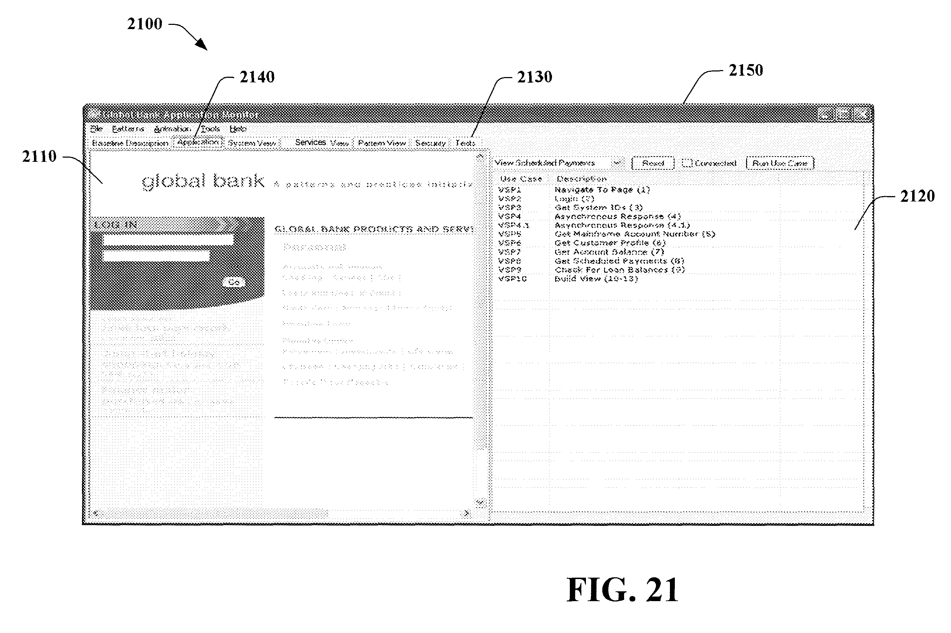

FIG. 21 is a diagram of a GUI 2100 that depicts certain aspects of a visualization of an architecture through a monitor program. The examples presented are based upon a banking application called Global Bank for clarity. The GUI 2100 includes a visualization pane 2110 and a use case pane 2120. The visualization pane 2110 includes a plurality of tabs 2130. Each tab 2130 can be activated, such as by clicking with a mouse-driven pointer, to provide different functionality. In the example presented, an Application tab 2140 is show as active and the visualization pane 2110 depicts a general welcome or login screen.

The use case pane 2120 includes a listing of use cases, such as the types of use cases that are employed in the unified modeling language (UML) scheme. The listing of use cases includes a name of each use case along with a brief description of each case. On-screen controls, such as drop-down menus, control buttons, check boxes, and the like, can be selected by a user to activate or modify functions associated with the use case pane.

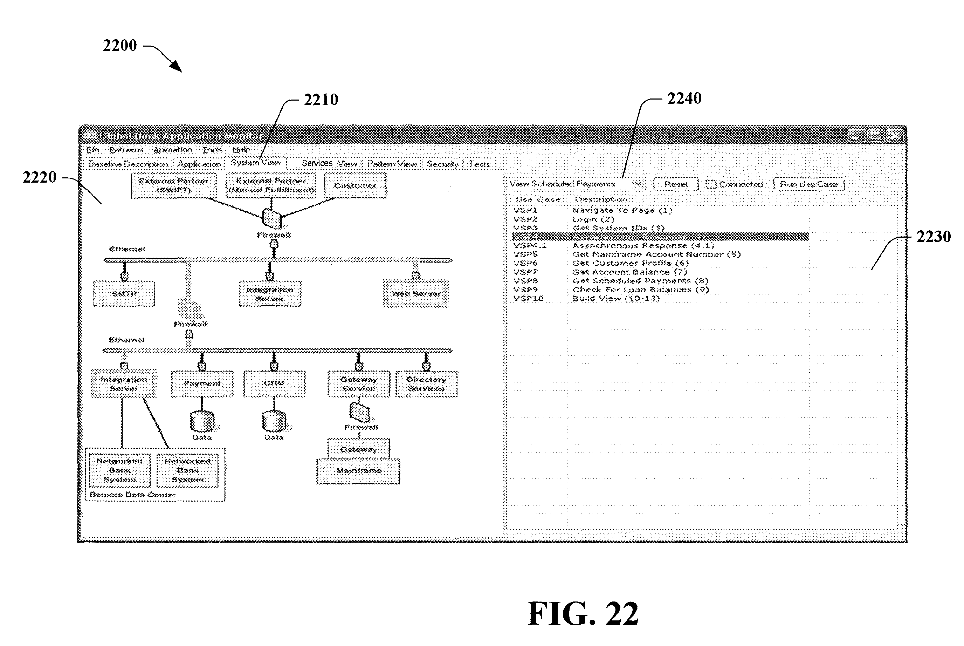

FIG. 22 depicts a GUI 2200 that has a System View tab 2210 active. A view of a skeletal application or architecture 2220 is depicted in the pane on the left. A set of use case descriptions 2230 is depicted in the pane on the right. Specifically, in a drop-down menu 2240, a use case View Scheduled Payments is listed. Sub-cases of the View Scheduled Payments use case are listed in a tabular format within the use case pane.

Referring to the architecture 2220, components involved in the use case View Scheduled Payments are shown along with interrelationships. Specifically, from top to bottom, external partners and customers are connected through a firewall to an Ethernet network that includes an SMTP server, an integration server, and a web server. This Ethernet network is in turn connected through a second firewall to a second Ethernet network that includes an integration server, a payment component with an associated data store, a CRM component with an associated data store, a directory services component, and a gateway service. The gateway service is connected through a third firewall to a gateway component of a mainframe computer. The second integration server is connected to a remote data center that includes two networked bank systems. Each of the components in pane 2220 is depicted by an icon that represents an abstraction of a related system component. The graphical depiction of such components provides an easily understandable and intuitive description of the architecture.

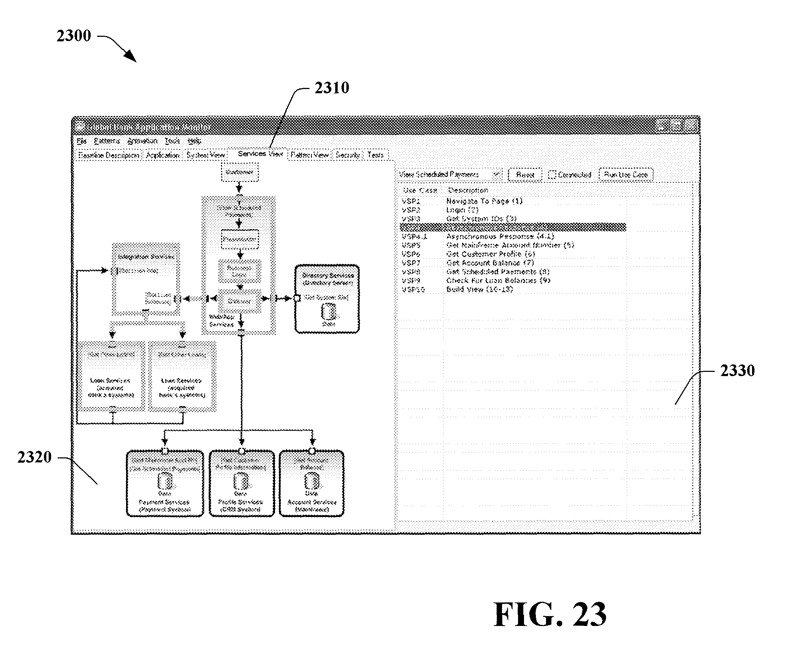

FIG. 23 is a depiction of a GUI 2300 that includes a Services View tab 2310 as the active tab. When the Services View tab 2310 is active, the architecture depicted in visualization pane 2320 is presented as a connected set of abstractions based upon functions provided by the components of the system rather than by the components themselves that may each provide more than one service. Components of a use case selected in a use case pane 2330 are graphically depicted in the visualization pane 2320. An overall effect of the GUI 2300 is to illustrate steps through a selected use case to a user.

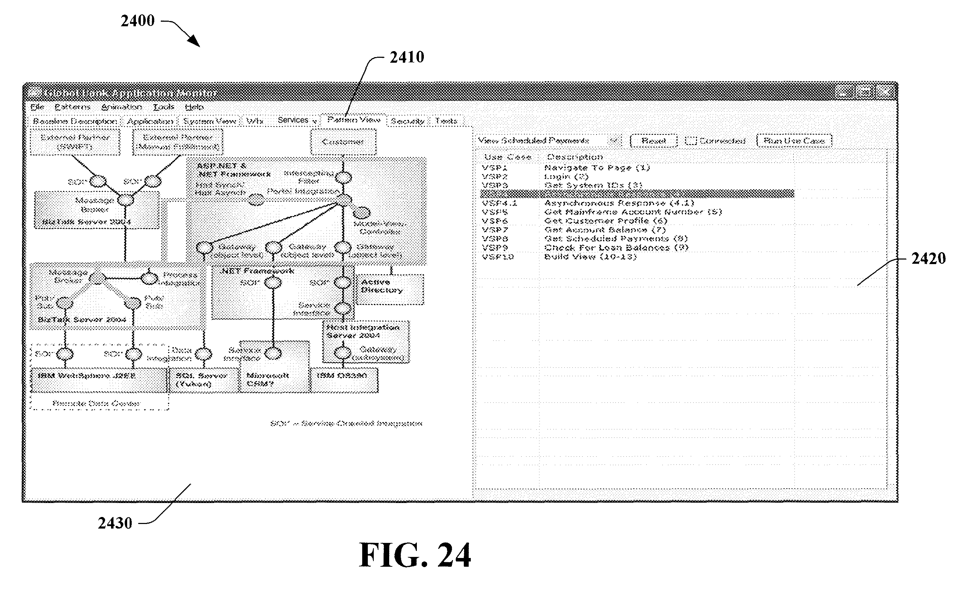

FIG. 24 depicts a GUI 2400 that includes an active Pattern View tab 2410. A use case and sub-components of that case are depicted in a use case pane 2420 in a fashion similar to that of GUI presentations of previous figures. When the pattern view tab 2410 is active, a graphical depiction 2430 of system components at a pattern-level of abstraction is presented to a user. A user can select and activate, such as by right-clicking with a mouse-driven pointer, individual components of the graphical depiction 2430 to obtain further details of the represented system. Such further details can include pattern narratives as well as views of underlying source code.

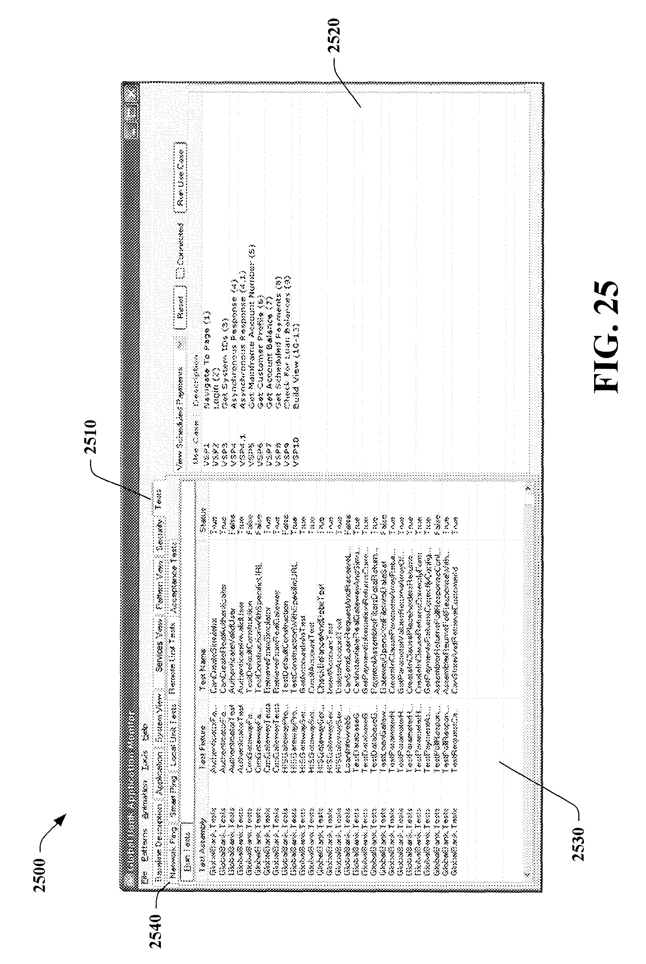

FIG. 25 is a diagram of a GUI 2500 that includes an active Tests tab 2510. As with previous examples, a use case pane 2520 depicts a use case in a previously described format. A presentation pane 2530 includes a listing of tests defined for components associated with a chosen use case. Additional tabs 2540 allow a user to access additional functions. In the example presented, a group of tests including data access tests and network connectivity tests are shown.

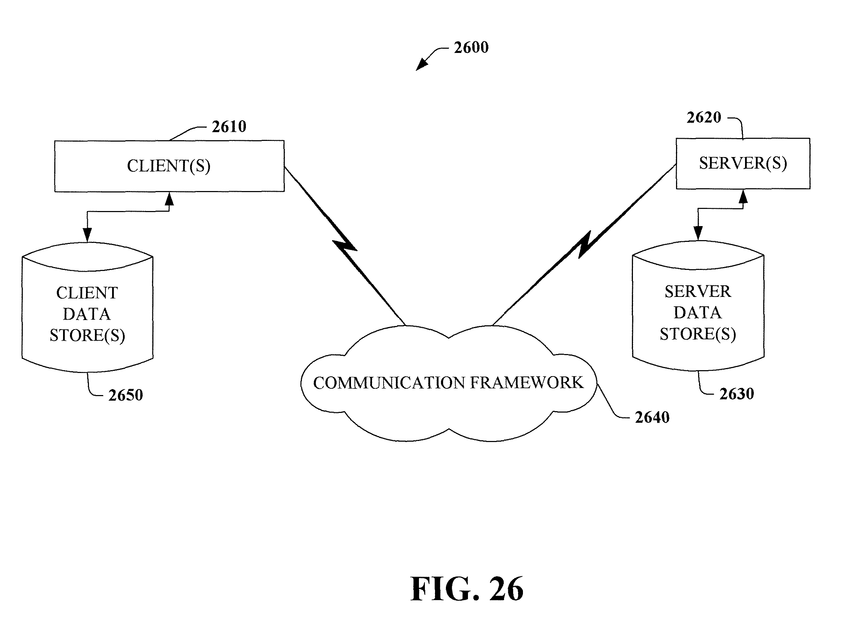

In order to provide additional context for implementing various components or methods, FIGS. 26 - 27 and the following discussion is intended to provide a brief, general description of a suitable computing environment. While the components and methods previously disclosed have been described above in the general context of computer-executable instructions of a computer program that runs on a local computer and/or remote computer, those skilled in the art will recognize that those components and methods also may be implemented in combination with other program modules. Generally, program modules include routines, programs, components, data structures, etc. that perform particular tasks and/or implement particular abstract data types.

Moreover, those skilled in the art will appreciate that the disclosed and described components and methods can be implemented with other computer system configurations, including single-processor or multi-processor computer systems, minicomputers, mainframe computers, as well as personal computers, hand-held computing devices, microprocessor-based and/or programmable consumer electronics, and the like, each of which may operatively communicate with one or more associated devices. Additional implementations can occur in distributed computing environments where certain tasks are performed by remote processing devices that are linked through a communications network. However, some, if not all, of the components and methods disclosed and described herein be practiced on stand-alone computers. In a distributed computing environment, program modules may be located in local and/or remote memory storage devices.

FIG. 26 is a schematic block diagram of a sample-computing environment 2600. The system 2600 includes one or more client(s) 2610. The client(s) 2610 can be hardware and/or software (e.g., threads, processes, computing devices). The system 2600 also includes one or more server(s) 2620. The server(s) 2620 can be hardware and/or software (e.g., threads, processes, computing devices). The servers 2620 can house threads or processes to perform transformations by employing the subject invention, for example.

One possible means of communication between a client 2610 and a server 2620 can be in the form of a data packet adapted to be transmitted between two or more computer processes. The system 2600 includes a communication framework 2640 that can be employed to facilitate communications between the client(s) 2610 and the server(s) 2620. The client(s) 2610 are operably connected to one or more client data store(s) 2650 that can be employed to store information local to the client(s) 2610. Similarly, the server(s) 2620 are operably connected to one or more server data store(s) 2630 that can be employed to store information local to the servers 2640.

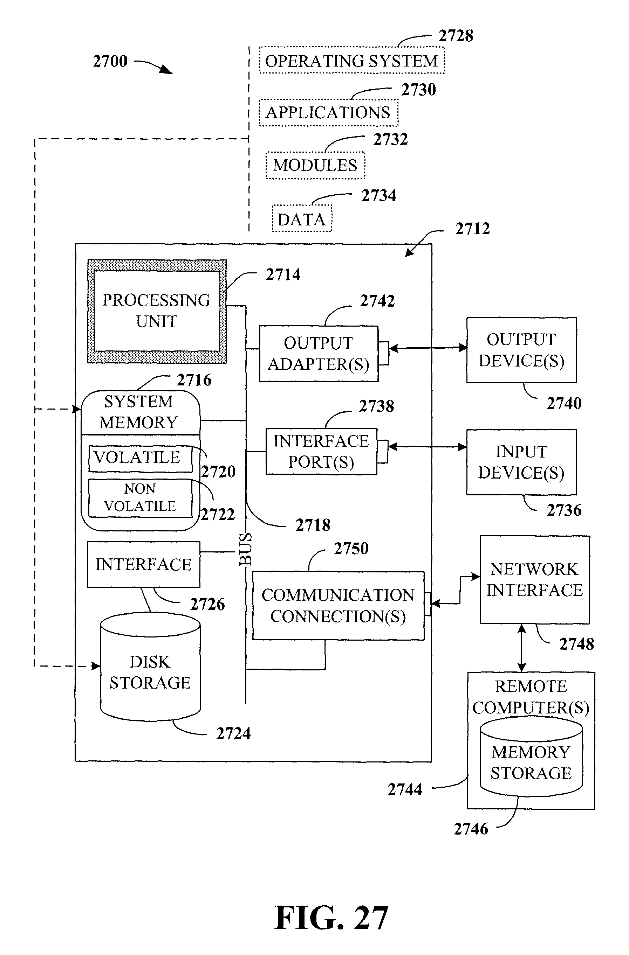

With reference to FIG. 27, an exemplary environment 2700 includes a computer 2712. The computer 2712 includes a processing unit 2714, a system memory 2716, and a system bus 2718. The system bus 2718 couples system components including, but not limited to, the system memory 2716 to the processing unit 2714. The processing unit 2714 can be any of various available processors. Dual microprocessors and other multiprocessor architectures also can be employed as the processing unit 2714.

The system bus 2718 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 2716 includes volatile memory 2720 and nonvolatile memory 2722. The basic input/output system (BIOS), containing the basic routines to transfer information between elements within the computer 2712, such as during start-up, is stored in nonvolatile memory 2722. By way of illustration, and not limitation, nonvolatile memory 2722 can include read only memory (ROM), programmable ROM (PROM), electrically programmable ROM (EPROM), electrically erasable ROM (EEPROM), or flash memory. Volatile memory 2720 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 2712 also includes removable/non-removable, volatile/non-volatile computer storage media. For example, FIG. 27 illustrates a disk storage 2724. The disk storage 2724 includes, but is not limited to, devices like a magnetic disk drive, floppy disk drive, tape drive, Jaz drive, Zip drive, LS-100 drive, flash memory card, or memory stick. In addition, disk storage 2724 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 2724 to the system bus 2718, a removable or non-removable interface is typically used such as interface 2726.

It is to be appreciated that FIG. 27 describes software that acts as an intermediary between users and the basic computer resources described in the suitable operating environment 2700. Such software includes an operating system 2728. The operating system 2728, which can be stored on the disk storage 2724, acts to control and allocate resources of the computer system 2712. System applications 2730 take advantage of the management of resources by operating system 2728 through program modules 2732 and program data 2734 stored either in system memory 2716 or on disk storage 2724. It is to be appreciated that the disclosed and described components and methods can be implemented with various operating systems or combinations of operating systems.

A user enters commands or information into the computer 2712 through input device(s) 2736. The input devices 2736 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 2714 through the system bus 2718 via interface port(s) 2738.
Interface port(s) 2738 include, for example, a serial port, a parallel port, a game port, and a universal serial bus (USB). Output device(s) 2740 use some of the same type of ports as input device(s) 2736. Thus, for example, a USB port may be used to provide input to computer 2712, and to output information from computer 2712 to an output device 2740. Output adapter 2742 is provided to illustrate that there are some output devices 2740 like monitors, speakers, and printers, among other output devices 2740, which require special adapters. The output adapters 2742 include, by way of illustration and not limitation, video and sound cards that provide a means of connection between the output device 2740 and the system bus 2718. It should be noted that other devices and/or systems of devices provide both input and output capabilities such as remote computer(s) 2744.

Computer 2712 can operate in a networked environment using logical connections to one or more remote computers, such as remote computer(s) 2744. The remote computer(s) 2744 can be a personal computer, a server, a router, a network PC, a workstation, a microprocessor based appliance, a peer device or other common network node and the like, and typically includes many or all of the elements described relative to computer 2712. For purposes of brevity, only a memory storage device 2746 is illustrated with remote computer(s) 2744. Remote computer(s) 2744 is logically connected to computer 2712 through a network interface 2748 and then physically connected via communication connection 2750. Network interface 2748 encompasses wire and/or wireless communication networks such as local-area networks (LAN) and wide-area networks (WAN). LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 2750 refers to the hardware/software employed to connect the network interface 2748 to the bus 2718. While communication connection 2750 is shown for illustrative clarity inside computer 2712, it can also be external to computer 2712. The hardware/software necessary for connection to the network interface 2748 includes, for exemplary purposes only, internal and external technologies such as, modems including regular telephone grade modems, cable modems and DSL modems, ISDN adapters, and Ethernet cards.

What has been described above includes examples of the disclosed and described components and methods. It is, of course, not possible to describe every conceivable combination of components or methodologies, but one of ordinary skill in the art may recognize that many further combinations and permutations of the subject invention are possible. Accordingly, is the examples are intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated examples. In this regard, it will also be recognized that a system as well as a computer-readable medium having computer-executable instructions comprising components or for performing the acts and/or events of the various methods disclosed and described herein .

In addition, while a particular feature of the invention may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

## Claims

1. A system for presenting a visual representation of a computing system, comprising:
a matching engine that accesses a data store of patterns that can be used as composable design elements to map components of a computing system to a pattern; and
a visualizer that presents a graphical representation of the pattern mapped by the matching engine.

2. The system of claim 1, further comprising a monitor engine that discovers the components of the computing system.

3. The system of claim 2, further comprising a code matching engine that matches machine-interpretable code with the pattern.

4. The system of claim 3, further comprising a composition engine that enables construction of a computing component based on the pattern.

5. The system of claim 4, further comprising a testing module that tests a constructed pattern-based computing component.

6. The system of claim 5, further comprising a security module that tests security aspects of the constructed pattern-based computing component.

7. The system of claim 6, further comprising a measurement module that gathers metrics for the constructed pattern-based computing component.

8. The system of claim 7, further comprising a view module that provides a view of the constructed pattern-based computing component based on at least one of an architecture view, a services view, and a pattern view.

9. A method for visually representing components of a computing system, comprising:
matching a pattern definition to a component of a computing system; and
graphically depicting a representation of the matched pattern definition for presentation to a user.

10. The method of claim 9, further comprising discovering the component of the computing system that can be matched to the pattern definition.

11. The method of claim 10, further comprising matching source code with the pattern.

12. The method of claim 11, further comprising constructing a second computing component by using a second pattern definition as a composable design element.

13. The method of claim 12, further comprising testing the second computing component.

14. The method of claim 13, further comprising evaluating security aspects of the second computing component.

15. A system for visually representing components of a computing system, comprising:
means for matching a pattern definition to a component of a computing system; and
means for graphically depicting a representation of the matched pattern definition for presentation to a user.

16. The system of claim 15, further comprising means for discovering the component of the computing system.

17. The system of claim 16, further comprising means for matching source code with the pattern.

18. The system of claim 17, further comprising means for constructing a second computing component by using a second pattern definition as a composable design element.

19. The system of claim 18, further comprising means for testing the second computing component.

20. The system of claim 19, further comprising evaluating security aspects of the second computing component.
